# DEMANDE DE BREVET EUROPEEN

(11) **EP 1 182 341 A1**
(43) Date de publication de la demande: **27.02.2002**
(21) Numéro de dépôt: 01402218.0
(22) Date de dépôt: 24.08.2001
(51) Int. Cl.: F02D 41/20, H01L 41/04

(54) **Dispositif de commande d'une céramique piézoélectrique, notamment pour un actionneur d'injecteur de moteur à combustion interne**

(30) Priorité: 25.08.2000 FR 0010924
(71) Demandeur: Renault, 92100 Boulogne Billancourt (FR)
(72) Inventeur: Ballesteros, Guillermo, 77290 Mitry Mory (FR); Macua, Eugenio, 75013 Paris (FR)

(57) **Abrégé**

Un convertisseur (CV) alimenté en basse tension et fournissant une haute tension, est connecté à un circuit de charge de la céramique (C) comprenant une inductance (L) formant avec la céramique un circuit oscillant, en série avec un transistor (T1) et une diode (D1).

Selon l'invention, il est prévu un circuit de décharge de l'inductance (L) comprenant un autre transistor (T4) en série avec une diode (D4) et relié entre cette inductance (L) et la sortie haute tension (Us) du convertisseur (CV). Ce transistor complémentaire (T4 est rendu conducteur pendant la décharge de ladite céramique, jusqu'à ce que le courant de décharge dans l'inductance (L) s'annule.

## Description

La présente invention est relative à un dispositif de commande d'une céramique piézo-électrique, notamment pour un actionneur d'un injecteur de carburant utilisé dans un moteur à combustion interne à injection, ce dispositif étant piloté électroniquement par un signal logique, et comprenant:
- un convertisseur DC/DC alimenté en basse tension et fournissant une haute tension,
- un circuit de charge de la céramique piézo-électrique alimenté par ledit convertisseur et comprenant une inductance formant avec la capacité de la céramique un circuit oscillant, en série avec un interrupteur commandé et une diode passante dans le sens de la charge,
- un circuit de décharge de la céramique piézo-électrique formé par un second circuit oscillant connecté à la borne de commande basse tension dudit convertisseur et monté en série avec un second interrupteur commandé et une seconde diode passante dans le sens de la décharge de ladite céramique, et
- des moyens de pilotage agencés pour engendrer, sous la commande dudit signal logique, les signaux de commande desdits interrupteurs pour provoquer respectivement la charge et la décharge de ladite céramique piézo-électrique.

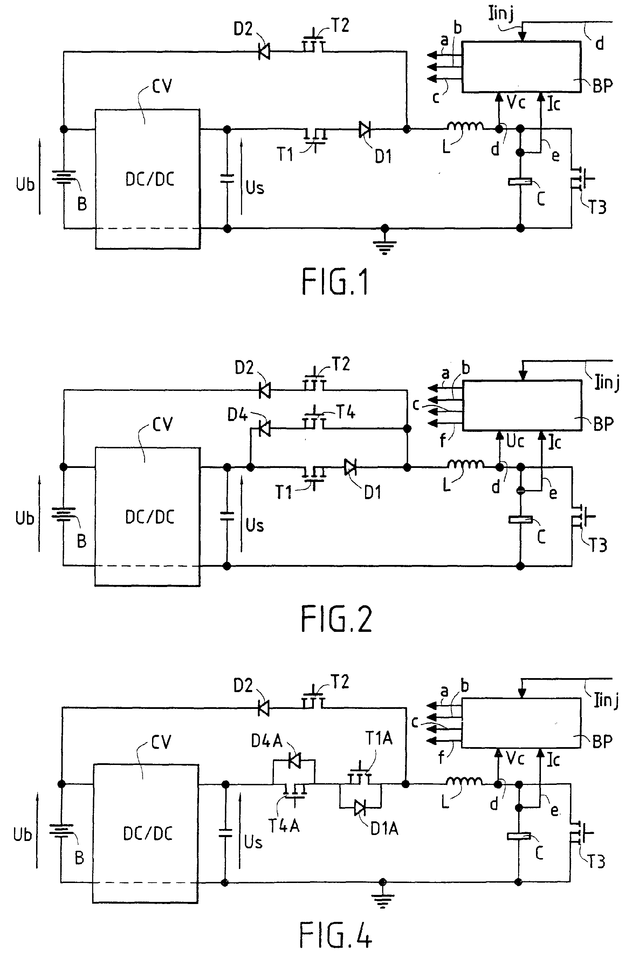

La figure 1 des dessins annexés est un schéma d'un dispositif de commande de ce type décrit dans la demande de brevet français n° FR 99 08 932 déposée le 9 juillet 1999 au nom de la Demanderesse. Il comprend un convertisseur CV tension continue/tension continue destiné à être alimenté par la tension Ub, du réseau de bord du véhicule à 12 Volts d'un véhicule automobile par exemple, ce réseau étant symbolisé ici par la batterie B. Le convertisseur CV est adapté pour élever la tension du réseau de bord à une valeur relativement élevée (100 Volts par exemple) compatible avec le fonctionnement d'une céramique piézo-électrique C qui se comporte électriquement comme une capacité, la haute tension du convertisseur CV apparaissant sur une sortie Us.

Cette sortie haute tension Us est connectée à la céramique piézo-électrique C par l'intermédiaire d'un montage en série d'un interrupteur semi-conducteur commandé T1, d'une diode D1 et d'une inductance L, cette dernière constituant avec la céramique piézo-électrique C un circuit oscillant. Ce montage est destiné à assurer la charge de la céramique piézo-électrique C, la diode D1 étant montée dans le sens passant pour la charge.

La jonction de l'inductance L et de la diode D1 est reliée à un second interrupteur semi-conducteur commandé T2 mis en série avec une diode D2 dont la cathode est reliée à l'entrée basse tension Ue du convertisseur CV. Ce circuit formé un second circuit oscillant dont la tension d'entrée est égale à la tension d'entrée Ub du convertisseur CV et qui, lorsque le transistor T2 est rendu conducteur, assure la décharge de la céramique piézo-électrique C.

Cette dernière est reliée en parallèle à un troisième interrupteur semi-conducteur commandé T3 qui a pour but de la maintenir à une tension nulle pendant tout le temps qu'elle est déchargée. Pendant ce temps, cet interrupteur T3 est donc maintenu dans son état conducteur. L'interrupteur semi-conducteur commandé T3 sert aussi à éviter qu'une tension négative ne s'établisse aux bornes de la céramique piézo-électrique. Il est à noter que l'interrupteur T3 peut être remplacé par un montage en parallèle d'une diode et d'une résistance, comme cela est prévu dans la demande de brevet précitée.

Les interrupteurs semi-conducteurs commandés T1, T2 et T3 sont constitués de préférence par des transistors MOSFET, comme représenté, mais ils peuvent être formés par d'autres composants semi-conducteurs de puissance, tels que des thyristors, des transistors bipolaires, des transistors IGBT, des transistors à effet de champ, etc., pour autant qu'ils soient de type bidirectionnel. Ceci étant, pour plus de commodité, les interrupteurs semi-conducteurs seront appelés "transistors" dans la suite du présent mémoire.

Les électrodes de commande des transistors sont reliées respectivement à trois sorties a, b et c d'un bloc de pilotage BP qui comporte par ailleurs une entrée de déclenchement d reliée à un dispositif de commande d'injection d'un moteur à combustion interne (non représenté), généralement un calculateur de gestion de ce moteur qui fournit un signal de demande d'injection Inj.

Ce bloc de pilotage BP comporte également des entrées de mesure e et f auxquelles sont appliqués respectivement des signaux qui représentent la tension Uₛ aux bornes de la céramique piézo-électrique C et le courant I_{C} qui circule dans celle-ci.

Lorsque dans ce dispositif de commande, le transistor T1 est rendu passant, la céramique piézo-électrique C se charge en mode oscillant à travers l'inductance L. La tension de charge a une allure sinusoïdale et en fin de charge, elle atteint une valeur 2V, V étant la tension présente sur la sortie haute tension Us du convertisseur CV. Cette valeur étant atteinte, le courant dans la céramique s'annule, la diode D1 se bloque et le transistor T1 est commandé au blocage. Pendant que la tension aux bornes de la céramique piézo-électrique reste constante à cette valeur, la valve de l'injecteur est ouverte et l'injection a lieu.

Dans les moteurs à combustion interne récents, il est devenu souhaitable de procéder à plusieurs injections par cycle d'un cylindre, par exemple trois injections successives appelées pré-injection, injection principale et post-injection. Un dispositif de commande tel que décrit ci-dessus doit ainsi être capable de fournir des signaux de commande d'injection se succédant rapidement. Dans le circuit antérieur que l'on vient de décrire, le temps de charge de la céramique piézo-électrique est compatible avec de telles successions rapides de signaux de commande. Quant au temps de décharge de la céramique piézo-électrique, on le rend plus court que le temps de charge en créant un circuit oscillant de décharge par l'intermédiaire du transistor T2 et de la diode D2.

Ce circuit de décharge de la céramique piézo-électrique C permet ainsi d'annuler très rapidement la tension aux bornes de ce dernier, ce qui est l'objectif essentiel visé dans la demande de brevet précitée.

Cependant, il s'est avéré que, même en prévoyant un circuit de décharge formé du transistor T2 et de la diode D2 et connecté à la tension de la batterie B, le rétablissement à l'état initial du circuit le rendant apte à recommencer un cycle de charge/décharge de la céramique piézo-électrique C, n'est pas atteint suffisamment tôt pour que le dispositif de commande soit totalement compatible avec les rapides successions d'injections requises par les moteurs à combustion interne récents.

L'invention a pour but de perfectionner le dispositif de commande décrit dans la demande de brevet précitée en le dotant d'un circuit de décharge assurant une remise plus rapide à l'état initial du circuit.

L'invention a donc pour objet un dispositif de commande du type défini en préambule qui est caractérisé en ce que
- il comprend également un circuit de décharge de ladite inductance comprenant un troisième interrupteur commandé en série avec une troisième diode et relié entre cette inductance et la borne de sortie haute tension dudit convertisseur, ladite diode étant montée dans le sens passant pour la décharge de ladite inductance et
   en ce que lesdits moyens de pilotage sont également agencés pour fermer ledit troisième interrupteur, au moins à partir du moment où, pendant la décharge de ladite céramique, la tension à ses bornes parvient à zéro, jusqu'à ce que le courant de décharge dans ladite inductance s'annule.

Grâce à ces caractéristiques, le dispositif de commande retrouve très rapidement les conditions initiales de fonctionnement pour lesquelles la céramique piézo-électrique peut subir une nouvelle charge pour assurer l'injection suivante. Les injections peuvent ainsi se suivre à un rythme plus rapproché que cela n'était le cas avec le dispositif de commande de la technique antérieure.

Selon d'autres caractéristiques de l'invention:
- ledit troisième interrupteur commandé en série avec ladite troisième diode forme une branche de circuit reliée entre ladite inductance et ladite borne de sortie haute tension dudit convertisseur;
- lesdits premier et troisième interrupteurs sont constitués par des composants semi-conducteurs dont le trajet de conduction est shunté par une diode faisant partie intégrante de leur structure et en ce que la diode inhérente dudit premier interrupteur commandé forme ladite troisième diode et la diode inhérente dudit troisième interrupteur forme ladite première diode, lesdites diodes inhérentes étant montées en tête-bêche;
- lesdits premier et troisième interrupteurs commandés sont des MOSFETs;
- lesdits moyens de pilotage sont également agencés pour rendre conducteur ledit troisième interrupteur commandé dès l'initiation de la décharge de ladite céramique piézo-électrique.

D'autres caractéristiques et avantages de la présente invention apparaîtront au cours de la description qui va suivre, donnée uniquement à titre d'exemple et faite en se référant aux dessins annexés sur lesquels:
- la figure 1 déjà décrite est un schéma d'un dispositif de commande d'un actionneur d'injecteur selon la technique antérieure;
- la figure 2 est un schéma d'un premier mode de réalisation d'un dispositif de commande selon l'invention;
- la figure 3 est un diagramme des temps illustrant le fonctionnement du dispositif de commande représenté sur la figure 2; et
- la figure 4 est un schéma d'un autre mode de réalisation de l'invention.

Suivant le mode de réalisation de l'invention représenté à la figure 2, le dispositif de commande pour actionneur piézo-électrique d'injecteur comprend tous les composants du circuit décrit ci-dessus, ces composants étant repérés par les mêmes références.

Selon l'invention, le dispositif de commande comprend une branche supplémentaire formée d'un transistor T4 en série avec une diode D4, dont l'anode est connectée à ce dernier. Le type utilisé pour ce transistor T4 peut être similaire à celui utilisé pour les transistors T1, T2 et T3. La branche supplémentaire est raccordée entre la jonction entre l'inductance L et la diode D1 et la sortie haute tension Us du convertisseur CV à laquelle est également relié le transistor T1.

Le transistor T4 est commandé à l'état conducteur par un signal apparaissant sur une borne de sortie supplémentaire g du bloc de pilotage BP. Cette borne g, comme d'ailleurs les bornes a, b et c, fournissent des signaux de commande pour les transistors du montage selon une séquence donnée initiée chaque fois par le signal d'injection Inj, cette séquence pouvant être dérivée d'un signal d'horloge par exemple, par de simples combinaisons logiques à la portée des spécialistes.

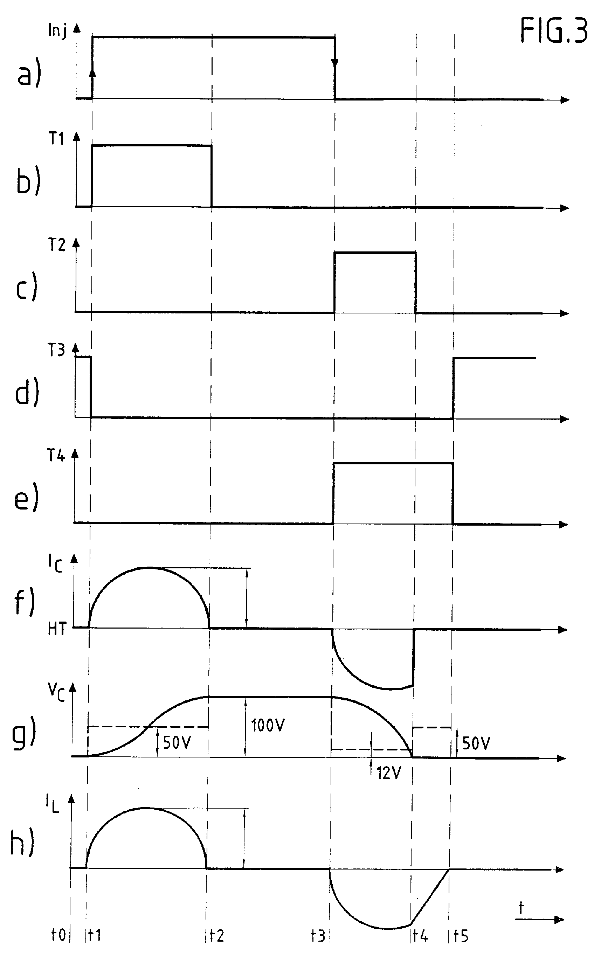

Le fonctionnement de ce dispositif de commande perfectionné selon l'invention va maintenant être décrit en se référant au diagramme des temps de la figure 3.

La courbe a) de ce diagramme montre le signal de demande d'injection Inj provenant du calculateur de commande du moteur à combustion interne. Ce signal peut représenter une demande de pré- ou post injection ou une injection principale, sa durée dépendant du type d'injection à commander.

Dans le cas représenté, il est supposé demander une injection lorsqu'il est au niveau haut, ce qui est le cas sur la figure 3 entre les instants t1 et t3. Il est donc inactif avant l'instant t1 depuis l'achèvement de l'injection précédente et après l'instant t3, jusqu'au début de l'injection suivante. La céramique piézo-électrique C ouvre l'injecteur pendant les intervalles d'activité pour assurer l'alimentation en carburant du cylindre du moteur à combustion interne auquel l'injecteur est associé.

Les courbes b), c) d) et e) de la figure 3 représentent en fonction du temps les états de conduction et de blocage des transistors respectifs T1, T2, T3 et T4. Ces états sont déterminés par les signaux de sortie a à c et g du bloc de pilotage BP dont, dans le présent exemple, les niveaux hauts correspondent à l'état de conduction des transistors. Ainsi, par exemple, le transistor T1 est conducteur dans l'intervalle t1-t2 et il est bloqué en dehors de cet intervalle.

Les courbes f) et g) de la figure 3 représentent respectivement l'allure du courant I_{C} dans la céramique piézo-électrique C et la tension V_{C} aux bornes de ce dernier. La courbe h) représente l'allure du courant I_{L} circulant dans l'inductance L.

Antérieurement au temps t1, les transistors T1, T2 et T4 sont non-conducteurs et la tension Vc aux bornes de la céramique piézo-électrique C est maintenue à une valeur nulle, le transistor T3 étant maintenu conducteur. Ainsi, on garantit qu'au moment où la demande d'injection est déclenchée, il ne subsiste sur la céramique piézo-électrique C aucune charge résiduelle.

Lorsque au temps t1 le signal de demande d'injection passe au niveau haut, le transistor T1 est rendu conducteur, les transistors T2 et T4 sont maintenus non-conducteurs et le transistor T3 est rendu non-conducteur.

La céramique piézo-électrique se comportant sensiblement comme une capacité, il est alors chargé en mode oscillant à partir du convertisseur CV à travers l'inductance L, le transistor T1 et la diode D1 montée dans le sens passant.

La séquence de charge s'arrête lorsque le courant dans l'inductance L s'annule au temps t2. La diode D1 se bloque. Le transistor T1 est rendu non-conducteur par le bloc de pilotage BP dès que celui-ci détecte les valeurs appropriées de la tension Vc et du courant Ic (entrées e et f).

A titre indicatif, le courant de charge Ic peut être de 15 A et la céramique piézo-électrique peut être chargée jusqu'à une tension de 100 V. L'intervalle entre t1 et t2 peut avoir une durée de 120 µsecs, par exemple.

Entre les instants t2 et t3, la céramique piézo-électrique étant chargée, l'injecteur est ouvert et du carburant peut être injecté dans le cylindre correspondant du moteur à combustion interne. Les composants du dispositif de commande conservent leur état pendant cet intervalle. Sa durée dépend de la longueur de l'injection souhaitée, l'axe des temps de la figure 3 n'étant donc pas à l'échelle.

Dès qu'au temps t3, le signal de demande d'injection prend son niveau bas sous la commande du calculateur d'injection (courbe a)), le bloc de pilotage BP rend conducteur le transistor T2 afin d'amorcer la décharge de la céramique piézo-électrique C.

Cette dernière est alors déchargée en régime oscillant par un circuit composé de l'inductance L, de la céramique piézo-électrique C, du transistor T2 et de la diode D2, jusqu'à ce qu'au temps t4, la tension aux bornes de la céramique piézo-électrique C annule. Ceci est détecté par le bloc de pilotage BP qui commande alors le blocage du transistor T2.

Pendant la décharge de la céramique piézo-électrique C, le courant Il dans l'inductance L s'est inversé et évolue selon une sinusoïde en passant par le transistor T2 et la diode D2.

L'invention est basée sur la constatation qu'à l'instant t4 où la tension Vc s'annule dans la céramique piézo-électrique, l'inductance L conserve encore une quantité d'énergie qui y a été accumulée au cours de la décharge, le courant IL n'étant à cet instant pas encore parvenu à zéro.

Tant que cette quantité d'énergie subsiste dans l'inductance L, les conditions initiales du dispositif de commande devant prévaloir pour amorcer une nouvelle injection, ne sont pas encore présentes.

Selon le perfectionnement de la présente invention, le dispositif de commande est conçu pour que le courant dans l'inductance puisse continuer à s'écouler dans la sortie haute tension Us du convertisseur CV au-delà de l'instant auquel la tension sur la céramique C s'annule.

Pour cela, la branche supplémentaire composée du transistor T4 et de la diode D4 est rendue conducteur au moins à partir du moment (instant t4) où le transistor T2 est coupé ou auquel la tension sur la céramique s'annule.

Toutefois avantageusement, le transistor T4 est rendu conducteur bien avant l'instant t4 comme représenté, de préférence déjà dès le début de la décharge de la céramique C, c'est à dire à l'instant t3.

Le courant dans l'inductance L peut ainsi très rapidement revenir à la valeur zéro comme le montre le tronçon R de la courbe h) pendant l'intervalle t4 - t5.

Puis, à l'instant t5, le transistor T4 étant rendu non-conducteur, le dispositif de commande est prêt à assurer une nouvelle injection.

De plus, le transistor T3 est rendu conducteur pour éviter toute accumulation de charges parasites sur la céramique piézo-électrique C jusqu'à ce que de nouveau le signal de demande d'injection Inj passe au niveau haut.

La courbe g) de la figure 3 montre par un trait mixte, l'allure de la tension qui est successivement appliquée au circuit oscillant du montage pendant le déroulement d'un cycle d'injection tel qu'il vient d'être décrit, les valeurs de tension indiquée correspondant aux celles des tensions et des courants indiquées à titre d'exemple ci-dessus. La durée de l'intervalle t4-t5 peut être dans ces conditions de seulement 40 µsec environ avec un courant d'une intensité de 15 Ampères, environ.

La figure 4 montre un autre mode de réalisation de l'invention dans lequel entre l'inductance L et la sortie haute tension Us du convertisseur CV sont raccordés en série deux transistors T1A et T4A qui dans ce cas doivent être d'un type comprenant en parallèle avec leur chemin de conduction principal, une diode faisant partie intégrante de la structure semi-conductrice du transistor. C'est le cas notamment des transistors MOSFET que l'on utilisera donc de préférence dans ce mode de réalisation. La connexion des transistors T1A et T4A doit être telle que leurs diodes D1A et D4A soient raccordées en tête-bêche, la diode D1A étant passante dans le sens de la charge de la céramique piézo-électrique et la diode D4A l'étant dans le sens de la décharge de l'inductance L.

Ce dispositif de commande fonctionne de la même façon que celui de la figure 2. Il présente l'avantage de pouvoir se dispenser des deux diodes discrètes D2 et D4 utilisées dans le premier mode de réalisation de l'invention.

## Revendications

1. Dispositif de commande d'un actionneur à céramique piézo-électrique (C), piloté électroniquement par un signal logique (Inj), ce dispositif comprenant:
- un convertisseur DC/DC (CV) alimenté en basse tension et fournissant une haute tension,
- un circuit de charge de la céramique piézo-électrique (C) alimenté par ledit convertisseur et comprenant une inductance (L) formant avec la capacité de la céramique un circuit oscillant, en série avec un interrupteur commandé (T1; T1A) et une diode (D1; D4A) passante dans le sens de la charge,
- un circuit de décharge de la céramique piézo-électrique (C) formé par un second circuit oscillant connecté à la borne d'alimentation basse tension (Ub) dudit convertisseur (CV) et monté en série avec un second interrupteur commandé (T2) et une seconde diode (D2) passante dans le sens de la décharge de ladite céramique, et
- des moyens de pilotage (BP) agencés pour engendrer, sous la commande dudit signal logique (Inj), les signaux de commande (a, b, c) desdits interrupteurs (T1, T2; T1A, T2) pour provoquer respectivement la charge et la décharge de ladite céramique piézo-électrique (C),
**caractérisé en ce que**
- il comprend également un circuit de décharge de ladite inductance (L) comprenant un troisième interrupteur commandé (T4; T4A) en série avec une troisième diode (D4; D1A) et relié entre cette inductance (L) et la sortie haute tension (Us) dudit convertisseur, ladite diode (D4; D1A) étant montée dans le sens passant pour la décharge de ladite inductance (L) et
**en ce que** lesdits moyens de pilotage (BP) sont également agencés pour fermer ledit troisième interrupteur (T4; T4A), au moins à partir du moment où, pendant la décharge de ladite céramique (C), la tension (Uc) à ses bornes parvient à zéro, jusqu'à ce que le courant de décharge (IL) dans ladite inductance (L) s'annule.

2. Dispositif de commande selon la revendication 1, **caractérisé en ce que** ledit troisième interrupteur commandé (T4) en série avec ladite troisième diode (D4) forme une branche de circuit reliée entre ladite inductance (L) et ladite sortie haute tension (Us) dudit convertisseur (CV).

3. Dispositif de commande selon la revendication 1, **caractérisé en ce que** lesdits premier et troisième interrupteurs (T1A, T4A) sont constitués par des composants semi-conducteurs dont le trajet de conduction principal est shunté par une diode (D1A, D4A) faisant partie intégrante de leur structure et **en ce que** la diode inhérente (D1A) dudit premier interrupteur commandé (TA1) forme ladite troisième diode et la diode inhérente (D4A) dudit troisième interrupteur (T4A) forme ladite première diode, lesdites diodes inhérentes étant montées en tête-bêche.

4. Dispositif de commande suivant la revendication 3, **caractérisé en ce que** lesdits premier et troisième interrupteurs commandés (T1A, T4A, sont des MOSFETs.

5. Dispositif de commande suivant l'une quelconque des revendications 1 à 4, **caractérisé en ce que** lesdits moyens de pilotage (BP) sont également agencés pour rendre conducteur ledit troisième interrupteur commandé (T4) dès l'initiation de la décharge de ladite céramique piézo-électrique (C).
